# FASCICULE DE BREVET EUROPEEN

(11) **EP 1 123 567 B1**
(45) Date de publication et mention de la délivrance du brevet: **11.06.2003**
(21) Numéro de dépôt: 99947551.0
(22) Date de dépôt: 12.10.1999
(51) Int. Cl.: H01P 1/26, H05H 1/12

(54) **CHARGE HYPERFREQUENCE SURDIMENSIONNEE DE GRANDE PUISSANCE CONTINUE ET SON UTILISATION COMME CALORIMETRE**
ÜBERDIMENSIONIERTER HÖCHSTFREQUENZABSORBER FÜR HOHE DAUERLEISTUNG UND SEINE VERWENDUNG ALS KALORIMETER
OVERSIZED MICROWAVE LOAD FOR CONTINUOUS HIGH POWER AND ITS USE AS CALORIMETER

(30) Priorité: 23.10.1998 FR 9813322
(43) Date de publication de la demande: 16.08.2001
(73) Titulaire: THALES ELECTRON DEVICES S.A., 78140 Vélizy (FR)
(72) Inventeur: TRAN, Cécile, Thomson-CSF Prop. Intellectuelle, 94117 Arcueil Cedex (FR); NESA, Jean-Paul, Thomson-CSF Prop. Intellectuelle, 94117 Arcueil Cedex (FR)
(74) Mandataire: Guérin, Michel
(86) Numéro de dépôt international: FR9902459
(87) Numéro de publication internationale: WO00025384

(56) Documents cités:
- EP-A- 0 369 857
- US-A- 4 593 259
- US-A- 4 740 763
- DATABASE WPI Section EI, Week 8706 Derwent Publications Ltd., London, GB; Class W02, AN 87-042250 XP002107102 & SU 1 239 770 A (USENKOV V V), 23 juin 1986 (1986-06-23)
- PATENT ABSTRACTS OF JAPAN vol. 017, no. 401 (E-1404), 27 juillet 1993 (1993-07-27) & JP 05 075312 A (MITSUBISHI ELECTRIC CORP), 26 mars 1993 (1993-03-26)
- DATABASE INSPEC [Online] INSTITUTE OF ELECTRICAL ENGINEERS, STEVENAGE, GB Inspec No. 3976735, MAKOWSKI M A ET AL: "MTX transport system for 140 GHz, 0.4 MW gyrotron" XP002107101 & CONFERENCE RECORD - ABSTRACTS. 1990 IEEE INTERNATIONAL CONFERENCE ON PLASMA SCIENCE (CAT. NO.90CH2857-1), OAKLAND, CA, USA, 21-23 MAY 1990, page 154 1990, New York, NY, USA, IEEE, USA

## Description

L'invention a pour objet une charge hyperfréquence de grande puissance et son utilisation comme calorimètre. Elle trouve son utilisation dans les domaines scientifiques et industriels quand il s'agit d'utiliser et/ou de mesurer les effets d'une dissipation thermique d'une onde électromagnétique hyperfréquence, notamment une onde produite par un tube hyperfréquence.

Les tubes hyperfréquences concernés, principalement les gyrotrons, sont utilisés pour exciter des résonances électroniques cyclotroniques dans des plasmas, et donc chauffer ces derniers. Ils sont aussi utilisés pour provoquer des entraînements de courants dans des expériences de fusion thermonucléaire, notamment dans des Tokamaks décrits dans le traité de Génie Electrique de la revue des Techniques de l'Ingénieur, Paris, France.

Les tubes hyperfréquences doivent subir une série de tests de conditionnement et de mesure après fabrication, étuvage et pompage. Au cours de ces tests, pendant des durées pouvant varier de 10 à 100 heures selon les types de tubes, ils sont progressivement amenés à leurs régimes nominaux de fonctionnement, que ce soit en terme de hautes tensions appliquées, de courants, de puissances d'entrée et de sortie, de champs magnétiques de focalisation de leur faisceau électronique, ou encore de réglage de circuits hyperfréquences de commande associés. Après succès de cette phase, appelée aussi phase d'essais, le tube est entré en magasin avant commercialisation ou utilisation.

Lors de ces essais, la puissance fournie par le tube doit être d'une part dissipée dans une charge adaptée comme pour tout amplificateur ou oscillateur et d'autre part mesurée. La particularité des tubes hyperfréquences est cependant que les puissances à dissiper dépassent le kW continu et peuvent atteindre même le MW continu dans le cas des gyrotrons de nouvelle génération. Une telle charge adaptée est en général refroidie par eau ou par air selon le niveau de puissance à dissiper. On mesure alors l'échauffement du fluide de refroidissement et on en déduit la puissance crête dissipée. Une telle charge adaptée peut donc servir de calorimètre (ce qui correspondrait à un bolomètre qui mesurerait de faibles niveaux de puissance pour des sources d'énergie à semi-conducteurs).

Les tubes de puissance en ondes millimétriques (gamme des 10 à 100 GHz), et notamment les gyrotrons, suivent un même déroulement pour leur phase d'essais. Leur particularité réside dans le fait que leurs essais se comptent en semaines plutôt qu'en dizaines d'heures dans l'état de l'art. En effet, les gyrotrons sont conçus et des technologies mises en oeuvre pour fournir des puissances allant de 100 à 500 kW, voire 1 MW pour la prochaine génération, en régime pulsé (impulsions typiquement de quelques secondes) voire continu (c'est-à-dire plusieurs minutes), et ceci à des fréquences telles que 8, 35, 60, 100, 110, 118 GHz par exemple, voire 140 et 170 GHz dans un avenir proche.

Leur mise en oeuvre chez un client utilisateur final nécessite également des essais préalables lors de la mise en place sur la machine finale (Tokamak, Stellerator, ou toute autre machine scientifique ou industrielle). Ces essais sont également réalisés avec une charge adaptée pouvant jouer le rôle de calorimètre, de manière d'une part à mesurer la puissance de sortie et donc d'optimiser le tube, et d'autre part à ne pas dissiper la puissance dans l'espace libre pour des raisons de sécurité.

On comprend donc bien l'intérêt de ces charges adaptées que ce soit en usine ou chez le client.

En ondes décimétriques et centimétriques, les charges sont en général monomode et constituées schématiquement par un guide d'onde tapissé de matériau absorbant (par exemple du SiC), ou partiellement remplie d'un tel matériau. Le tout est refroidi à l'extérieur, par de l'eau par exemple, dès que les puissances dépassent typiquement la centaine de Watts. Un tel guide d'onde peut également être traversé par une ou plusieurs cannes en matériau diélectrique (verre, céramique... ) dans lesquelles circule de l'eau pour le refroidissement, cette eau étant plus ou moins chargée en sels minéraux pour augmenter son pouvoir absorbant.

En ondes millimétriques, et pour de fortes puissances, les contraintes sont d'un tout autre ordre, et ceci pour plusieurs raisons :
- la puissance absolue et les durées d'impulsion demandées pendant quelques minutes par les clients sont très élevées : de 0,5 MW à 1 MW typiquement ;
- l'absorption des matériaux augmentant avec la fréquence, en ondes millimétriques et qui plus est à forte puissance, la puissance dissipée peut entraîner des échauffements importants, et la fatigue puis la rupture localisée des matériaux utilisés si l'onde n'est pas diffractée suffisamment dans la charge ;
- un mode HE11, qui est un mode quasi-gaussien en propagation guidée, est un mode demandé par les clients. En effet, ce mode présente surtout l'avantage, pour le client, de propager l'onde jusqu'à la machine utilisatrice avec de faibles pertes de transmission. Mais il présente l'inconvénient majeur, pour le concepteur, de produire des niveaux de densités de puissance très élevés et très localisés du fait de la forme gaussienne du champ. Or des dissipations localisées et importantes provoquent des échauffements localisés pouvant entraîner à terme la fissuration de la céramique des charges classiques ;
- enfin, pour des raisons économiques les clients spécifient très souvent de faibles débits de fluide de refroidissement au regard des puissances à dissiper et de faibles pressions d'entrée de ces fluides. Ceci réduit considérablement la capacité de refroidissement disponible ou rend critique ce refroidissement.

Ces conditions font que le principe des charges dissipatrices de l'état de la technique ne peut plus être utilisé pour des gyrotrons et que d'autres concepts doivent donc être mis en oeuvre.

En outre, afin d'éviter des claquages dus aux forts champs électriques produits, les charges doivent pouvoir fonctionner sous un vide poussé (bien meilleur que 10⁻² Pa) et imposent donc l'absence de matériaux fortement désorbants.

La présente invention a pour objet d'apporter une solution à ces problèmes par une remise en cause des solutions anciennes. Dans l'invention, puisque les absorbants présentent des inconvénients rédhibitoires à ces niveaux de puissance et de fréquence, on n'en utilisera pas, ou au moins pas essentiellement. Le principe de l'invention comporte alors la réalisation d'une enceinte dont les parois sont de deux types. Des parois d'un premier type sont parfaitement réfléchissantes des ondes électromagnétiques, ou presque parfaitement. Les parois d'un deuxième type de l'enceinte sont moins réfléchissantes (donc plus absorbantes) que les parois du premier type. Néanmoins, eu égard aux absorbants connus, ces deux types pourraient être qualifiés de non absorbants. Ensuite l'énergie à dissiper dans la charge est injectée dans l'enceinte de l'invention sous la forme d'une onde électromagnétique. Comme les parois de l'enceinte sont semi-réfléchissantes, l'onde injectée s'y réfléchit de très nombreuses fois et y est absorbée progressivement tout en se diffractant.

Au cours de ces nombreuses réflexions, elle se disperse d'une part et son énergie est absorbée par les parois les plus absorbantes d'autre part. Elle se disperse par dispersion naturelle parce que plus rien n'est prévu pour en assurer la propagation selon un mode privilégié, et aussi parce que les parois de l'enceinte peuvent avoir des formes induisant une telle dispersion. De ce fait, des niveaux de densité d'énergie trop élevés et localisés ne sont plus rencontrés. D'autre part, du fait de la différence de pouvoir réfléchissant des différentes parois, toute l'énergie finit par se dissiper dans la totalité de la paroi la moins réfléchissante. On refroidit donc cette paroi la moins réfléchissante (la plus absorbante) par l'extérieur.

L'invention a donc pour objet une charge hyperfréquence comportant une enceinte de dissipation de l'énergie d'une onde hyperfréquence injectée dans l'enceinte, une paroi cylindrique, de préférence présentant une grande surface et de symétrie cylindrique circulaire, et deux obturateurs disposés de part et d'autre d'un cylindre constitué par la paroi. Une telle charge hyperfréquence est décrite dans le document US-A-4 740 763. L'invention est caractérisée en ce que la paroi est réalisée en un matériau métallique moins réfléchissant de l'onde que ne le sont des faces internes des obturateurs de manière à ce que l'onde hyperfréquence injectée s'y réfléchisse et répartisse son énergie en de nombreux endroits. L'enceinte est de plus surdimensionnée par rapport au diamètre d'un guide d'onde d'injection, ce qui permet de se rapprocher du comportement d'un corps noir.

Pour une utilisation en calorimètre, il suffit d'utiliser la charge dans ce but. Celle-ci est alors particulièrement bien adaptée à un tel usage compte tenu de ce que toutes les parois réfléchissantes ou semi-réfléchissantes sont refroidies par un même fluide, et qu'il est facile de mesurer l'échauffement de ce fluide.

L'invention a donc également pour objet l'utilisation d'une telle charge comme calorimètre.

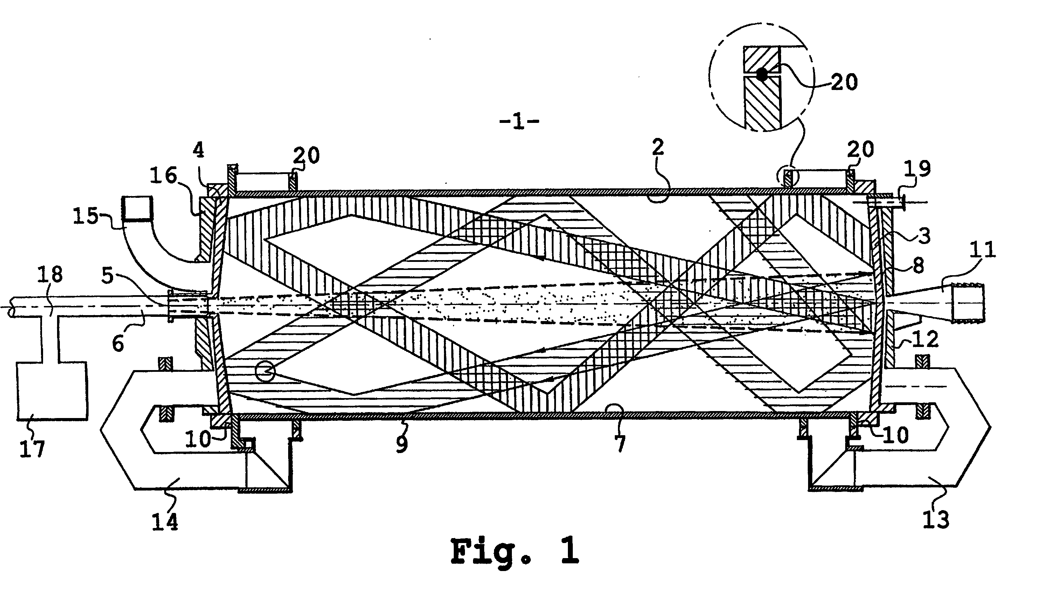

L'invention sera mieux comprise à la lecture de la description qui suit et à l'examen de la figure qui l'accompagne. Celles-ci ne sont présentées qu'à titre indicatif et nullement limitatif de l'invention. La figure 1, unique, montre une vue en coupe d'un exemple d'une charge hyperfréquence selon l'invention.

La figure 1 montre une enceinte 1, ici métallique, de grandes dimensions et de forme cylindrique. Pour des raisons de meilleure répartition de l'énergie électromagnétique, la forme est cylindrique circulaire. Mais on pourrait envisager toute autre forme permettant de diffracter les faisceaux hyperfréquence. La figure 1 montre une paroi 2 de forme cylindrique circulaire, et deux obturateurs 3 et 4 disposés de part et d'autre du cylindre formé par la paroi 2. L'obturateur 3 sert à réfléchir, par un effet miroir, une onde hyperfréquence injectée dans l'enceinte 1 par une entrée de guide d'onde 5 ménagée dans l'obturateur 4 en vis-à-vis de l'obturateur 3. L'obturateur 4 joue aussi un rôle de miroir. Ces deux obturateurs d'extrémité comportent dans ce but des miroirs métalliques réfléchissants, de préférence avec des formes calculées (par exemple coniques, paraboliques, sphériques etc.) pour qu'ils diffractent au maximum l'onde hyperfréquence incidente arrivant par un guide d'onde 6 dans l'entrée de guide d'onde 5.

La paroi 2 de l'enceinte 1 est par ailleurs pourvue d'un circuit 7 de refroidissement. Cette paroi 2 est par exemple métallique, en un métal relativement absorbant (par exemple elle comporte une peau en acier inoxydable ou en titane) à haute fréquence au contraire des deux obturateurs 3 et 4. Cette paroi 2 pourra avoir été préalablement préparée pour absorber faiblement aux endroits où la densité de flux de puissance est trop élevée, et vice versa. En pratique, le coefficient d'absorption pourra ainsi varier longitudinalement le long de cette paroi, la longueur étant prise dans une direction allant d'un obturateur à l'autre. La fonction de la face interne des deux obturateurs 3 et 4 est de renvoyer la puissance sur cette paroi 2 relativement absorbante. Les faces internes des obturateurs 3 et 4 sont par exemple en cuivre. Les tracés en tirets et en traits pleins montrent que l'onde qui se réfléchit au point 8 sur l'obturateur 3 subit ensuite de nombreuses réflexions successives dont peu se produisent au contact des obturateurs et toutes les autres au contact de la paroi 2. La proportion plus grande des réflexions sur cette paroi 2 et la nature moins réfléchissante de sa surface (plus absorbante) font que l'onde incidente s'y amortit, peu à peu, en répartissant son énergie en de multiples endroits. La contribution de la paroi 2 à l'absorption de la puissance haute fréquence est aussi plus grande parce que sa surface est plus grande que celle des obturateurs. Tout ceci est favorable à la réduction des niveaux de densité locale de puissance à dissiper.

Avec le circuit 7, le refroidissement de l'enceinte 1 est assuré par une circulation de fluide forcée ou turbulente de tous types de fluides, notamment de l'eau. Le circuit 7 a de préférence une géométrie de refroidissement à forts coefficients d'échange. Il est par exemple muni de structures poreuses ou à chicanes interposées sur le trajet d'un film de fluide, circulant entre l'enceinte métallique 2 et une chemise 9. Ces structures sont adaptées selon l'énergie à dissiper et les spécifications hydrauliques du client.

L'enceinte 1 est prévue pour subir des dilatations radiales et longitudinales dues à la charge thermique. Donc on évite la rupture par fatigue de celle-ci. La chemise 9 est de plus conçue pour pouvoir se mouvoir indépendamment des dilatations de la paroi 2. Dans ce but la chemise 9 est mécaniquement reliée aux obturateurs 3 et 4 et à la paroi 2 par des joints souples 20 autorisant une dilatation différentielle mais formant avec la face externe de la paroi 2 un circuit hydraulique étanche. En effet, dans les charges comportant des céramiques, ces matériaux n'ayant pas un comportement plastique, la rupture est quasiment instantanée en raison des niveaux de densité de puissance absorbés atteints. La chemise 9 repose sur le sol par l'intermédiaire d'un socle non représenté. Elle maintient la paroi 2 et les obturateurs 3 et 4 par l'intermédiaire de joints 10, métalliques prévus pour un étuvage au-delà de 300°C.

Le refroidissement de l'ensemble avec un seul circuit d'eau principal permet de l'utiliser comme calorimètre, puisqu'on récupère toute la puissance dissipée. Dans ce but le circuit 7 comporte une alimentation en fluide 11 placée sensiblement au centre de l'obturateur 3, contre une face externe de ce dernier. Le fluide de refroidissement s'écoule en nappe, dans un circuit pouvant être simple, avec chicanes ou muni de tout matériau poreux augmentant l'échange, entre cette face externe de l'obturateur 3 et un couvercle 12 en retour de la chemise 9. A la périphérie du couvercle 12, le fluide est réinjecté dans un espace cylindrique compris entre la paroi 2 et la chemise 9 par un coude 13. A l'autre extrémité de l'enceinte 1, près de l'obturateur 4, le fluide de refroidissement est extrait par un coude 14 après avoir subi, ou non, un certain nombre d'allers et retours (selon le besoin en vitesse de fluide) le long de l'enceinte 1. Le fluide est alors réinjecté en nappe contre la face externe de l'obturateur 4 de la même manière que pour l'obturateur 3. Puis il est rejeté par un tuyau 15 prenant appuis sur un couvercle 16 de l'obturateur 4. Une ouverture 19 permet par ailleurs de placer un dispositif de pompage (pompe turbomoléculaire, ou ionique par exemple) muni d'une jauge à vide.

L'ensemble est compatible avec un fonctionnement sous vide poussé (typiquement de l'ordre de 10⁻⁷ à 10⁻⁸ hectopascals). En effet la paroi 2 et les obturateurs 3 et 4 étant tout en métal, le calorimètre est naturellement conçu pour des étuvages à des températures de plus de 300 °C selon le type de joints métalliques utilisés. Cela permet ensuite, en munissant l'entrée de guide d'onde 5 d'une vanne-tiroir tout métal, de se dispenser d'un conditionnement de la charge elle-même, puisqu'elle aura été dégazée préalablement et ne dégazera plus lors de l'application de la puissance hyperfréquence et donc de l'échauffement de celle-ci. En effet, au cours du stockage et du transport de l'enceinte, après fabrication, la vanne est fermée, le vide se conserve. Une fois installée sur un tube, en bout du guide 6, la vanne est amenée à l'ouverture.

De plus, la construction décrite réduit grandement les risques de fuites d'eau dans l'enceinte sous vide par absence de circuit d'eau à l'intérieur de l'enceinte.

Afin d'éviter des perçages-passages qui affaibliraient une structure d'aussi grandes dimensions, on utilise le guide d'entrée 6 comme orifice de pompage pour y maintenir le vide et on pompe l'enceinte par ce guide d'entrée par l'intermédiaire d'un Té 18 de pompage qui mène à une pompe 17. Cette disposition a l'avantage :
- d'être plus efficace en terme de conductance puisque le diamètre du guide 6 et de l'orifice 5 est plus élevé (guide surdimensionné) que les trous de pompage standards des charges existantes et qu'il n'y a nul besoin de mettre de grille de pompage qui réduit la conductance,
- de ne pas créer de faiblesses mécaniques dans la charge par adjonction de passage dans l'enveloppe.

Le surdimensionnement de l'ensemble (plus de 2 m de long et plus de 0.5 m de diamètre pour 500 kW à 118 GHz par exemple) permet d'une part de pouvoir dissiper efficacement des puissances élevées dans l'absolu. Il permet d'autre part de minimiser la puissance réfléchie dans le guide d'onde d'entrée 6, donc le ROS de l'enceinte 1. Celle-ci se comporte alors bien comme une charge adaptée. Ceci réduit les perturbations du tube hyperfréquence en amont, du gyrotron, du fait d'un faible retour de puissance.

La forme des miroirs réfléchissant, en cuivre par exemple, permet de diffracter et donc de répartir la puissance au maximum sur toute la surface de l'enceinte et donc de réduire considérablement la densité de puissance maximale absorbée par la paroi 2 de l'enceinte 1. Les miroirs permettent en conséquence la minimisation de points chauds préjudiciables à la tenue mécanique. Cette construction autorise que l'ensemble soit de géométrie totalement cylindrique circulaire (en plaçant le guide d'onde d'entrée 6 sur l'axe de l'enceinte 1). En effet, la présence de zones très chaudes, de manière dissymétrique, comme cela est le cas pour des charges de l'état de l'art dans lesquelles l'injection de puissance électromagnétique est oblique, entraîne des faiblesses mécaniques donc des risques de vrillage et de flambage. Par exemple, la présence de points chauds peut aboutir à la perforation de l'enceinte 1 si le refroidissement n'est pas suffisant localement au regard des densités de flux localisés. Dans l'état de l'art, la présence d'une protubérance, souvent constituée par un miroir déflecteur placé en face d'un orifice d'injection de l'onde électromagnétique, aboutit à un point de concentration de champ électromagnétique derrière ce miroir déflecteur. Elle aboutit donc à des claquages dès les premières millisecondes de fonctionnement et finalement à la fusion locale de l'enceinte en régime continu.

Les caractéristiques de l'invention sont par comparaison :
- une charge de grand volume sans protubérances internes, ni, de préférence, de matériaux absorbants autres que les parois naturelles ;
- des miroirs aux deux extrémités, avec des formes telles qu'ils dispersent la puissance incidente initialement concentrée selon une symétrie axiale. Ils répartissent donc au maximum la puissance sur la surface interne 2 de la charge, sans points potentiellement à forte densité de puissance absorbée ;
- l'onde fait presque un aller et retour (donc parcourt une grande distance, typiquement quatre mètres) avant de venir frapper la paroi 2 relativement absorbante. Ceci permet d'utiliser comme agent dispersant la diffraction naturelle du faisceau, complétée par la diffraction créée par les miroirs, ce qui réduit notablement les densités de flux ;
- les deux miroirs sont parfaitement réfléchissants à la fréquence d'utilisation (et sont par exemple en cuivre). Mais la paroi métallique cylindrique est relativement absorbante (elle est en métal tel que l'acier inoxydable, le titane etc.);
- le circuit de refroidissement 7 comporte une chemise 9 dans laquelle vient s'emboîter la paroi 2 proprement dite, et permettant un découplage thermomécanique et par conséquent le libre mouvement du cylindre interne 2, par rapport aux parois externes 9 plus froides. Cela a pour conséquence d'augmenter considérablement la fiabilité de tels dispositifs, puisque les matériaux subissent moins de contraintes élevées ;
- l'étuvage d'une telle charge est possible car la partie étuvable est entièrement métallique et est démontable, car il n'y a pas dans l'enceinte de matériaux critiques et car il n'y a aucune pièce positionnée de façon critique qui se déformerait ou se déplacerait après étuvage ou toute autre sollicitation thermique ;
- la charge peut donc fonctionner sous vide poussé ce qui évite tout risque de claquages certes dans la charge mais également dans le guide d'entrée. Elle est donc compatible avec des tubes munis de fenêtres refroidies avec des liquides cryogéniques et reproduit bien les conditions de fonctionnement sur machine sous vide (Tokamak, Stellerator).

## Revendications

1. Charge hyperfréquence comportant une enceinte (1) de dissipation de l'énergie d'une onde hyperfréquence injectée dans l'enceinte, une paroi cylindrique (2) et deux obturateurs ((3),(4)) disposés de part et d'autre d'un cylindre constitué par la paroi, **caractérisée en ce que** la paroi est réalisée en un matériau métallique moins réfléchissant de l'onde que ne le sont des faces internes des obturateurs de manière à ce que l'onde hyperfréquence injectée s'y réfléchisse et répartisse son énergie en de nombreux endroits.

2. Charge selon la revendication 1, **caractérisée en ce que** la paroi comporte une peau en acier inoxydable ou en titane, et ou **en ce que** la face interne des obturateurs est en cuivre.

3. Charge selon l'une des revendications 1 à 2, **caractérisée en ce qu'**elle comporte une paroi cylindrique circulaire.

4. Charge selon l'une des revendications 1 à 3, **caractérisée en ce qu'**elle comporte une chemise (9) cylindrique enveloppant la paroi (2), un film (7) d'un fluide de refroidissement interposé entre la chemise et la paroi, et un joint (20) souple entre une extrémité de la paroi et la chemise pour éliminer des problèmes de dilatation différentielle.

5. Charge selon la revendication 4, **caractérisée en ce qu'**elle comporte une structure poreuse et ou une structure à chicanes pour améliorer un échange thermique entre la paroi et le fluide de refroidissement.

6. Charge selon l'une des revendications 1 à 5, **caractérisée en ce qu'**un orifice (5) d'injection de l'onde hyperfréquence est disposé au centre d'un obturateur (4), et est muni de préférence d'une vanne-tiroir tout métal.

7. Charge selon l'une des revendications 1 à 6, **caractérisée en ce que** l'enceinte est une enceinte à vide munie d'un dispositif d'injection de l'onde hyperfréquence et d'un Té (18) de pompage (17) pour maintenir le vide.

8. Charge selon l'une des revendications 1 à 7, **caractérisée en ce que** les faces internes des obturateurs ont des formes aptes à disperser une onde incidente à répartition concentrée d'énergie, notamment des formes coniques, paraboliques ou sphériques.

9. Charge selon l'une des revendications 1 à 8, **caractérisée en ce que** la surface de la paroi moins réfléchissante est plus grande que la surface des deux obturateurs.

10. Charge selon l'une des revendications 1 à 9, **caractérisée en ce qu'**un coefficient d'absorption du matériau moins réfléchissant de la paroi cylindrique varie longitudinalement entre un obturateur et l'autre.

11. Utilisation de la charge selon l'une des revendications 1 à 9 comme calorimètre hyperfréquence.

## Patentansprüche

1. Höchstfrequenzlast, die einen Behälter (1) für die Abführung von Energie einer in den Behälter eingeleiteten Höchstfrequenzwelle, eine zylindrische Wand (2) sowie zwei Verschlüsse (3, 4), die beiderseits eines durch die Wand gebildeten Zylinders angeordnet sind, umfaßt, **dadurch gekennzeichnet, daß** die Wand aus einem metallischen Werkstoff hergestellt ist, die die Welle weniger als die Innenflächen der Verschlüsse reflektiert, so daß die eingeleitete Höchstfrequenzwelle hier reflektiert wird und ihre Energie auf zahlreiche Stellen verteilt.

2. Last nach Anspruch 1, **dadurch gekennzeichnet, daß** die Wand eine Haut aus rostfreiem Stahl oder aus Titan aufweist und daß die Innenfläche der Verschlüsse aus Kupfer ist.

3. Last nach einem der Ansprüche 1 bis 2, **dadurch gekennzeichnet, daß** sie eine kreisförmige zylindrische Wand umfaßt.

4. Last nach einem der Ansprüche 1 bis 3, **dadurch gekennzeichnet, daß** sie eine die Wand (2) einhüllende zylindrische Außenhaut (9), einen zwischen der Außenhaut und der Wand befindlichen Kühlungsfluidfilm (7) und eine elastische Dichtung (20) zwischen einem Ende der Wand und der Außenhaut, die der Beseitigung von Problemen unterschiedlicher Ausdehnung dient, umfaßt.

5. Last nach Anspruch 4, **dadurch gekennzeichnet, daß** sie eine poröse Struktur und/oder eine Versatzstruktur aufweist, um den Wärmeaustausch zwischen der Wand und dem Kühlungsfluid zu verbessern.

6. Last nach einem der Ansprüche 1 bis 5, **dadurch gekennzeichnet, daß** eine Blende (5) zum Einleiten der Höchstfrequenzwelle in der Mitte eines Verschlusses (4) angeordnet und vorzugsweise mit einem vollständig metallischen Schieber versehen ist.

7. Last nach einem der Ansprüche 1 bis 6, **dadurch gekennzeichnet, daß** der Behälter ein Vakuumbehälter ist, der mit einer Vorrichtung zum Einleiten einer Höchstfrequenzwelle sowie mit einem T-Stück (18) für eine Pumpe (17), um das Vakuum aufrechtzuerhalten, versehen ist.

8. Last nach einem der Ansprüche 1 bis 7, **dadurch gekennzeichnet, daß** die Innenflächen der Verschlüsse Formen besitzen, die eine auftreffende Welle mit konzentrierter Energieverteilung streuen können, insbesondere konische, parabolische oder sphärische Formen.

9. Last nach einem der Ansprüche 1 bis 8, **dadurch gekennzeichnet, daß** die Oberfläche der weniger reflektierenden Wand größer als die Oberfläche der zwei Verschlüsse ist.

10. Last nach einem der Ansprüche 1 bis 9, **dadurch gekennzeichnet, daß** sich ein Absorptionskoeffizient des weniger reflektierenden Materials der zylindrischen Wand longitudinal zwischen einem Verschluß und dem anderen ändert.

11. Verwendung der Last nach einem der Ansprüche 1 bis 9 als Höchstfrequenz-Kalorimeter.

## Claims

1. Microwave load comprising a chamber (1) for dissipating the energy of a microwave injected into the chamber, a cylindrical wall (2) and two obturators (3), (4) placed on either side of a cylinder formed by the wall, **characterized in that** the wall is made of a metallic material that reflects the microwave less than the internal faces of the obturators so that the injected microwave is reflected therefrom and distributes its energy at many points.

2. Load according to Claim 1, **characterized in that** the wall has a skin made of stainless steel or titanium and **in that** the internal face of the obturators is made of copper.

3. Load according to either of Claims 1 and 2, **characterized in that** it has a circular cylindrical wall.

4. Load according to one of Claims 1 to 3, **characterized in that** it has a cylindrical jacket (9) surrounding the wall (2), a film (7) of a coolant interposed between the jacket and the wall, and a flexible joint (20) between one end of the wall and the jacket in order to eliminate any differential expansion problems.

5. Load according to Claim 4, **characterized in that** it has a porous structure and/or a baffled structure in order to improve heat exchange between the wall and the coolant.

6. Load according to one of Claims 1 to 5, **characterized in that** an orifice (5) for injecting the microwave is placed at the centre of an obturator (4) and is preferably provided with an all-metal slide valve.

7. Load according to one of Claims 1 to 6, **characterized in that** the in chamber is a vacuum chamber provided with a device for injecting the microwave and with a pumping (17) Tee (18) for maintaining the vacuum.

8. Load according to one of Claims 1 to 7, **characterized in that** the internal faces of the obturators have shapes capable of dispersing an incident microwave with concentrated energy distribution, especially conical, parabolic or spherical shapes.

9. Load according to one of Claims 1 to 8, **characterized in that** the surface area of the less-reflective wall is greater then surface area of the two obturators.

10. Load according to one of Claims 1 to 9, **characterized in that** the absorption coefficient of the less-reflective material of the cylindrical wall varies longitudinally between one obturator and the other.

11. Use of the load according to one of Claims 1 to 9 as microwave calorimeter.
